# EUROPEAN PATENT APPLICATION

(11) **EP 2 006 075 A1**
(43) Date of publication of application: **24.12.2008**
(21) Application number: 07739683.6
(22) Date of filing: 26.03.2007
(51) Int. Cl.: B29C 65/16, F04D 29/28, B29L 31/08

(54) **LASER WELDING METHOD, LASER WELDING DEVICE, AND PRODUCTION METHOD OF BLOWER-USE IMPELLER**

(30) Priority: 28.03.2006 JP 2006089001
(71) Applicant: DAIKIN INDUSTRIES, LTD., Osaka-shi, Osaka 530-8323 (JP)
(72) Inventor: NISHINO, Hisanoric/o Kanaoka Factory, Sakai-shi, Osaka;5918511 (JP)
(74) Representative: HOFFMANN EITLE
(86) International application number: PCT/JP2007/056245
(87) International publication number: WO 2007/111310

(57) **Abstract**

In a laser welding method for performing laser irradiation while moving an irradiation position, burn marks are optimally prevented from remaining in a laser light irradiation pathway even in cases in which debris, metal powder, or the like adhering to superimposed part of resin members is ignited by the laser irradiation. In this laser welding method, a transmissive resin member (11) and an absorptive resin member (12) having lower optical transmittance than the transmissive resin member (11) are superimposed together to form a superimposed part (13), laser irradiation is performed from the side of the transmissive resin member (11) while moving the irradiation position with respect to the superimposed part (13), and a noncombustible gas is blown onto the irradiation position from the side of the transmissive resin member (11) in accordance with the movement of the laser light irradiation position.

## Description

### TECHNICAL FIELD

The present invention relates to a laser welding method, a laser welding apparatus, and a method for manufacturing an impeller for a blower. The present invention particularly relates to a laser welding method for welding resin members together while moving a laser irradiation position, to a laser welding apparatus used in the laser welding method, and to a method for manufacturing an impeller for a blower that uses the laser welding method.

### BACKGROUND ART

Turbofans, sirocco fans, and other such blowers are conventionally used in ventilatiors, air conditioners, air purifiers, and the like. An impeller for a blower constituting this type of blower comprises a resinous end plate rotated around a rotational axis by a motor or another such drive mechanism, a plurality of resinous blades having hollow spaces formed in interiors thereof, and a resinous end ring disposed so as to sandwich the blades between the end plate and the end ring, wherein the impeller is manufactured by using a laser to weld the end plate and the blades together, and also to weld the end ring and the blades together, as shown in Patent Document 1. Thus, the impeller for a blower is divided and molded as a plurality of resin members (an end plate, an end ring, and blades in this case) and manufactured by using a laser to weld the resin members together, whereby it is easy to make the blades hollow or into another such shape and to optimize the shapes of the resin members with the objectives of improving blowing performance or noise performance, reducing weight, and the like in comparison with cases in which the resin members are integrally molded or cases in which the resin members are welded by ultrasonic welding or another such welding method.
Patent Document 1
   Japanese Laid-open Patent Application No. 2005-155510

### DISCLOSURE OF THE INVENTION

When the impeller for a blower described above is manufactured, the blade side surface of the end plate and the one ends of the blades may, for example, be superimposed together to form superimposed parts, laser light is directed from the end plate side while moving the irradiation position with respect to the superimposed part, the blade side surface of the end ring and the other ends of the blades are superimposed together to form superimposed parts, and laser light is directed from the end ring side while moving the irradiation position with respect to the superimposed part, whereby the blades are welded to the end plate and the end ring.

However, in cases in which the blades are welded to the end plate or the end ring while moving the irradiation position of the laser light as described above, debris, metal powder, or the like adheres to the sides of the superimposed part near the end plate or the end ring, creating the danger that the debris, metal power, or the like will be ignited by the laser irradiation, and the resin in the ignited irradiation position will burn, and that burning of the resin will occur starting at the irradiation position where the debris, metal powder, or the like has ignited and continuing along the laser light irradiation pathway by the movement of the laser light irradiation position.

Thus, when debris, metal powder, or the like ignites, burn marks are left along the laser light irradiation pathway starting at the irradiation position in the superimposed part where the debris, metal powder, or the like has ignited, resulting in a product of poor quality. Particularly, in cases such as when a transparent or semitransparent material is used as the material constituting the end plate and end ring, using a material that has higher optical transmittance than does the material constituting the blades causes such burn marks to be extremely noticeable and produces undesirable effects. Since the burning of the resin implies that the energy from the laser light is consumed by the burning of the resin, there is the danger that welding between the resin members will be inadequate in the portions where burn marks are left.

An object of the present invention is to optimally prevent burn marks from remaining in the laser light irradiation pathway in a laser welding method for performing laser irradiation while moving the irradiation position, even in cases in which debris, metal powder, or the like adhered to the superimposed part of the resin members has been ignited by the laser irradiation.

A laser welding method according to a first aspect of the present invention is a laser welding method for resin members, wherein a transmissive resin member having high optical transmittance and an absorptive resin member having lower optical transmittance than the transmissive resin member are superimposed together to form a superimposed part, laser irradiation is performed from the side of the transmissive resin member while moving the irradiation position with respect to the superimposed part, and a noncombustible gas is blown onto the irradiation position from the side of the transmissive resin member in accordance with the movement of the laser light irradiation position.

With this laser welding method, since laser irradiation is performed from the side of the transmissive resin member while moving the irradiation position with respect to the superimposed part, and also since a noncombustible gas is blown onto the irradiation position from the side of the transmissive resin member in accordance with the movement of the laser light irradiation position, even if debris, metal powder, or the like adhering to the superimposed part is ignited by the laser irradiation, the burning of the resin in the ignited irradiation position is suppressed, continuous burning of the resin along the irradiation pathway does not occur due to the movement of the laser light irradiation position, it is possible to optimally prevent burn marks from remaining in the laser light irradiation pathway starting at the irradiation position where the debris, metal powder, or the like has ignited, and satisfactory welding of both resin members in the superimposed part is made possible. The term "noncombustible gas" in -this case refers to a gas that is not a combustible gas such as methane gas, propane gas, or the like.

A laser welding method according to a second aspect of the present invention is the laser welding method according to the first aspect, wherein the noncombustible gas is blown from a direction that intersects the movement direction of the irradiation position.

With this laser welding method, since the noncombustible gas is blown from a direction that intersects the movement direction of the irradiation position, smoke produced from the irradiation position where debris, metal powder, or the like has ignited can be quickly removed from the irradiation pathway, and a satisfactory state of laser light irradiation can be maintained in the irradiation position.

A method for manufacturing an impeller for a blower according to a third aspect of the present invention is a method for manufacturing a resinous impeller for a blower, wherein a plurality of resinous blades as absorptive resin members are welded to resinous blade-supporting rotator as a transmissive resin member by the laser welding method according to the first or second aspect.

With this method for manufacturing an impeller for a blower, since the blades are welded to the blade-supporting rotator by the laser welding method according to the first or second aspect, even if debris, metal powder, or the like adhering to the superimposed parts between the blade-supporting rotator and the blades is ignited by the laser irradiation, the burning of the resin in the ignited irradiation position is suppressed, it is possible to optimally prevent burn marks from remaining in the laser light irradiation pathway starting at the irradiation position where the debris, metal powder, or the like has ignited, and satisfactory welding is made possible between the blade-supporting rotator and the blade in the superimposed part.

A laser welding apparatus according to a fourth aspect of the present invention is a laser welding apparatus for resin members, the apparatus comprising a laser irradiation lens unit capable of irradiating the resin members with laser light while the irradiation position is moved, and a discharge nozzle mounted on the laser irradiation lens unit and capable of blowing a noncombustible gas toward the irradiation position.

With this laser welding apparatus, since the discharge nozzle is mounted on the laser irradiation lens unit and the blown position of the noncombustible gas moves together with the movement of the laser light irradiation position, even if debris, metal powder, or the like adhering to the superimposed part is ignited by the laser irradiation, the burning of the resin in the ignited irradiation position is suppressed, continuous burning of the resin along the irradiation pathway does not occur due to the movement of the laser light irradiation position, it is possible to optimally prevent burn marks from remaining in the laser light irradiation pathway starting at the irradiation position where the debris, metal powder, or the like has ignited, and satisfactory welding of the resin members in the superimposed part is made possible.

A laser welding apparatus according to a fifth aspect of the present invention is the laser welding apparatus according to the fourth aspect, wherein the discharge nozzle is open so as to blow the noncombustible gas from a direction that intersects the movement direction of the irradiation position.

With this laser welding apparatus, since the discharge nozzle is open so as to blow the noncombustible gas from a direction that intersects the movement direction of the irradiation position, smoke produced from the irradiation position where debris, metal powder, or the like has ignited can be quickly removed from the irradiation pathway, and a satisfactory state of laser light irradiation can be maintained in the irradiation position.

A laser welding apparatus according to a sixth aspect of the present invention is the laser welding apparatus according to the fourth or fifth aspect, wherein instrument air as the noncombustible gas is supplied to the discharge nozzle.

With this laser welding apparatus, it is preferred that the noncombustible gas be blown at a comparatively low pressure or in a small amount, because the debris, metal powder, or the like adhering to the surfaces of the irradiation positions of the resin members must not be scattered into the laser light by the blowing of the noncombustible gas, and because smoke produced from the irradiation position where debris, metal powder, or the like has ignited must be quickly removed from the irradiation pathway. In view of this, in this laser welding apparatus, instrument air, which is suitable for supplying a small amount of air at a comparatively low pressure, is used as the noncombustible gas. Thereby, with this laser welding apparatus, the debris, metal powder, or the like adhering to the surfaces of the irradiation positions of the resin members can be prevented from scattering into the laser light by the blowing of the noncombustible gas, and smoke produced from the irradiation position where debris, metal powder, or the like has ignited can be quickly removed from the irradiation pathway.

### BRIEF DESCRIPTION OF THE DRAWINGS

FIG 1 shows a schematic block diagram of a laser welding apparatus for implementing the laser welding method according to an embodiment of the present invention.
FIG. 2 is a perspective view showing a laser irradiation lens unit and a superimposed part of two resin members.
FIG. 3 is an external perspective view of an impeller for a blower in an example.
FIG. 4 is a view of the impeller for a blower as seen from the end ring side.
FIG. 5 is a cross-sectional view along the line F-F in FIG 4.

### DESCRIPTION OF THE REFERENCE SYMBOLS

- 1: Laser welding apparatus
- 2: Laser irradiation lens unit
- 5: Discharge nozzle
- 11: Transmissive resin member
- 12: Absorptive resin member
- 13: Superimposed part
- 43: End plate (blade-supporting rotator)
- 44: Blade
- 45: End ring (blade-supporting rotator)

### BEST MODE FOR CARRYING OUT THE INVENTION

The following is a description, made with reference to the drawings, of an embodiment of the laser welding method and the laser welding apparatus according to the present invention.

### (1) Basic configuration of laser welding apparatus and basic operation during laser welding

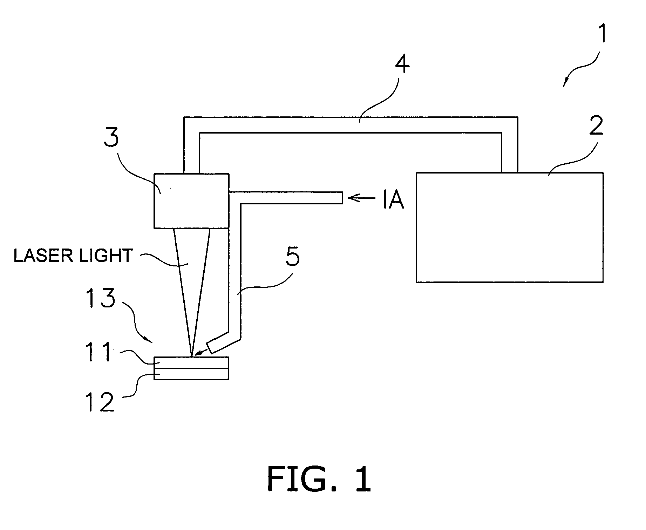

FIG 1 shows a schematic block diagram of a laser welding apparatus 1 for implementing the laser welding method according to an embodiment of the present invention.

In the present embodiment, the laser welding apparatus 1 is an apparatus for laser welding resin members, and includes mainly a laser light source unit 2 and a laser irradiation lens unit 3.

The laser light source unit 2 has an oscillator or the like for generating a semiconductor laser or other such laser light.

The laser irradiation lens unit 3 has a lens or the like for focusing the laser light generated in the laser light source unit 2 and directing the focused laser light 11 in a predetermined direction toward an irradiation position. In the present embodiment, the laser irradiation lens unit 3 is separate from the laser light source unit 2, and is designed to receive the laser light generated in the laser light source unit 2 via an optical fiber 4. In the present embodiment, the laser irradiation lens unit 3 is connected to the laser light source unit 2 via the flexible optical fiber 4, and is configured to be capable of directing laser light onto a resin member while the irradiation position is moved by a drive mechanism (not shown).

In the laser welding apparatus 1 having the basic configuration described above, similar to a conventional laser welding apparatus, laser light generated in the laser light source unit 2 is focused in the laser light source unit 2, and laser irradiation can be performed while moving the irradiation position with respect to a superimposed part 13 formed by superimposing two resin members 11, 12. The resin member 11 is a resin member (hereinbelow referred to as the transmissive resin member 11) that has high optical transmittance with respect to laser light, and is composed of, e.g., a transparent or semitransparent, or other such resin material. The resin member 12 is a resin member (hereinbelow referred to as the absorptive resin member) that has a lower optical transmittance with respect to laser light than the transmissive resin member 11, and is composed of, e.g., an opaque, black, or other such resin material. Therefore, laser irradiation is performed from the side of the transmissive resin member 11 onto the superimposed part 13 of the resin members 11, 12. Laser light directed from the laser irradiation lens unit 3 onto the superimposed part 13 is transmitted through the transmissive resin member 11 to the absorptive resin member 12, and the energy of the laser light is absorbed by the absorptive resin member 12, whereby heat is produced. The portion of the absorptive resin member 12 that produces heat and the portion of the transmissive resin member 11 in contact with this heat-producing portion are thereby welded together.

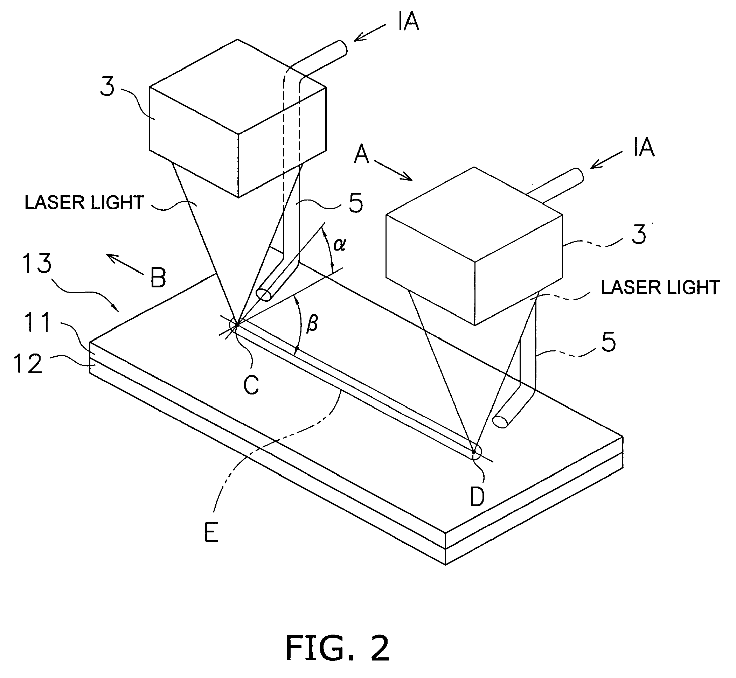

More specifically, in the present embodiment, since the laser irradiation lens unit 3 is capable of performing laser irradiation while the irradiation position is moved, the laser light directed from the laser irradiation lens unit 3 onto the superimposed part 13 is first directed onto a laser-irradiated starting position C as shown in FIG. 2, whereby the transmissive resin member 11 and the absorptive resin member 12 are welded together in the portion of the superimposed part 13 corresponding to the position C. The laser irradiation lens unit 3 then moves in the A direction, whereby the irradiation position of the laser light directed onto the superimposed part 13 moves from the position C to a position D, and the transmissive resin member 11 and absorptive resin member 12 are welded together in the portion of an oblong irradiation pathway E which is long and thin and which encloses the area from the position C to the position D. FIG. 2 is a perspective view showing the laser irradiation lens unit 3 and the superimposed part 13 of the two resin members 11, 12. In the above description, the laser irradiation lens unit 3 can itself move in the A direction to move the irradiation position, but instead of moving the laser irradiation lens unit 3 itself to move the irradiation position, another option may, for example, be to move the irradiation position of the laser light by moving the resin members 11, 12 in the B direction without moving the laser irradiation lens unit 3 itself.

However, as described above, in cases in which the resin members 11, 12 are laser welded together while the laser light irradiation position is moved, when debris, metal powder, or the like adheres in some position along the irradiation pathway E in the superimposed part 13 (more specifically, in the surface of the transmissive resin member 11 facing the laser irradiation lens unit 3, in the portion corresponding to the irradiation pathway E in the superimposed part 13), there is a danger that the debris, metal powder, or the like will be ignited by the laser irradiation, that the resin in the ignited irradiation position will burn, and that the movement of the laser light irradiation position will cause the resin to continuously burn along the irradiation pathway E of the laser light starting at the irradiation position where the debris, metal powder, or the like has ignited. Thus, when debris, metal powder, or the like ignites, burn marks remain on the laser light irradiation pathway E starting at the irradiation position in the superimposed part 13 where the debris, metal powder, or the like has ignited, resulting in a product of poor quality. Since the material constituting the transmissive resin member 11 in particular is a transparent or semitransparent resin material, such burn marks are extremely noticeable, and this effect is undesirable. Since the burning of the resin implies that the energy from the laser light is consumed by the burning of the resin, there is the danger that welding between the resin members 11, 12 will be insufficient in the portions where burn marks are left.

In view of this, in the laser welding apparatus 1 of the present embodiment, a discharge nozzle 5, which is capable of blowing instrument air (denoted by "IA" in FIGS. 1 and 2) as a noncombustible gas toward the laser light irradiation position, is mounted on the laser irradiation lens unit 3 so as to optimally prevent burn marks from remaining on the laser light irradiation pathway E starting at the irradiation position where resin burning occurs. The discharge nozzle 5 and a laser welding method that uses the discharge nozzle 5 are described hereinbelow.

### (2) Configuration of discharge nozzle and operation during laser welding that includes discharge nozzle

The discharge nozzle 5 is mounted to the laser irradiation lens unit 3, and is capable of blowing instrument air as a noncombustible gas toward the laser light irradiation position. In the present embodiment, the discharge nozzle 5 is a tube member that is mounted on the laser irradiation lens unit 3 and that opens so as to be capable of blowing instrument air as a noncombustible gas toward the laser light irradiation position (in the surface of the transmissive resin member 11 facing the laser irradiation lens unit 3, the portion corresponding to the irradiation pathway E in the superimposed part 13). The discharge nozzle 5 is connected either directly or via the interior of the laser light source unit 2 to instrument air piping through which flows instrument air used in a factory or the like. The term "noncombustible gas" in this case refers, for example, to a gas that is not a combustible gas such as methane gas, propane gas, or the like, and nitrogen, a noble gas, or another such inert gas can also be used in addition to instrument air.

The discharge nozzle 5 opens so as to blow instrument air from a direction that intersects the movement direction of the irradiation position. Provided that an angle β is the angle formed by the distal end part of the discharge nozzle 5 with the movement direction of the irradiation position, β is set between 60 degrees and 120 degrees in the present embodiment, and is preferably set at approximately 90 degrees.

The discharge nozzle 5 opens so as to blow instrument air along the surface of the superimposed part 13 from the side of the transmissive resin member 11. Provided that an angle α is the angle formed by the distal end part of the discharge nozzle 5 with the surface of the superimposed part 13 on the side of the transmissive resin member 11, α is set to 60 degrees or less in the present embodiment, and is preferably set to be 30 degrees or less.

In the laser welding apparatus 1 having the discharge nozzle 5 described above, the discharge nozzle 5 is mounted on the laser irradiation lens unit 3, and the blown position of the noncombustible gas therefore moves in accordance with the movement of the laser light irradiation position when laser welding is performed between the resin members 11, 12. Accordingly, in cases in which debris, metal powder, or the like adheres in some position along the irradiation pathway E of the superimposed part 13 (more specifically, in the surface of the transmissive resin member 11 facing the laser irradiation lens unit 3, in the portion corresponding to the irradiation pathway E in the superimposed part 13), even if the debris, metal powder, or the like is ignited by the laser irradiation, burning of the resin in the ignited irradiation position is suppressed and the movement of the laser light irradiation position does not cause the resin to continuously burn along the irradiation pathway E, because instrument air as a noncombustible gas is blown from the discharge nozzle 5 onto the ignited irradiation position. It is thereby possible to optimally prevent burn marks from remaining along the laser light irradiation pathway E starting at the irradiation position where the debris, metal powder, or the like has ignited, and the resin members 11, 12 in the superimposed part 13 are satisfactorily welded.

Since the discharge nozzle 5 opens so as to blow the noncombustible gas from a direction that intersects the movement direction of the irradiation position, smoke produced from the irradiation position where the debris, metal powder, or the like has ignited is quickly removed from the irradiation pathway E, and a satisfactory state of laser light irradiation can be maintained in the irradiation position. Thereby, the smoke produced from the irradiation position where the debris, metal powder, or the like has ignited does not readily cause welding defects.

To ensure that the debris, metal powder, or the like adhering to the surface of the transmissive resin member 11 at the irradiation position is not scattered into the laser light by the blowing of the noncombustible gas in the process in which the smoke produced from the irradiation position where the debris, metal powder, or the like has ignited is quickly removed from the irradiation pathway E, it is preferable to blow the noncombustible gas at a comparatively low pressure or in a small amount. For this requirement, in the present embodiment, instrument air suitable for supplying air at a comparatively low pressure and in a small amount is used as the noncombustible gas, and it is therefore possible to ensure that debris, metal powder, or the like adhering to the surface of the transmissive resin member 11 in the irradiation position is not scattered into the laser light by the blowing of the noncombustible gas; and also to quickly remove the smoke, which is produced from the irradiation position where the debris, metal powder, or the like has ignited, from the irradiation pathway E.

Furthermore, since the discharge nozzle 5 opens so as to blow the instrument air along the surface of the superimposed part 13 from the side of the transmissive resin member 11, it is easy to produce an action whereby the smoke produced at the irradiation position where the debris, metal powder, or the like has ignited is quickly removed from the irradiation pathway E, and an action whereby situations are prevented in which debris, metal powder, or the like adhering to the surface of the transmissive resin member 11 at the irradiation position is scattered into the laser light by the blowing of the noncombustible gas.

### <Examples>

The following is a description, made with reference to the drawings, of an example in which the laser welding method and laser welding apparatus described above are used to manufacture an impeller for an air blower.

### (1) Configuration of impeller for a blower

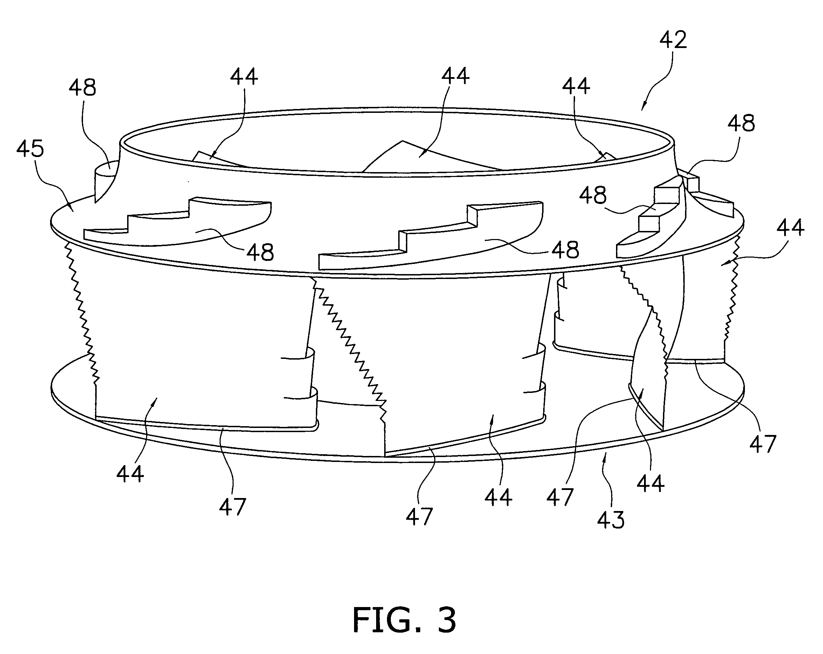

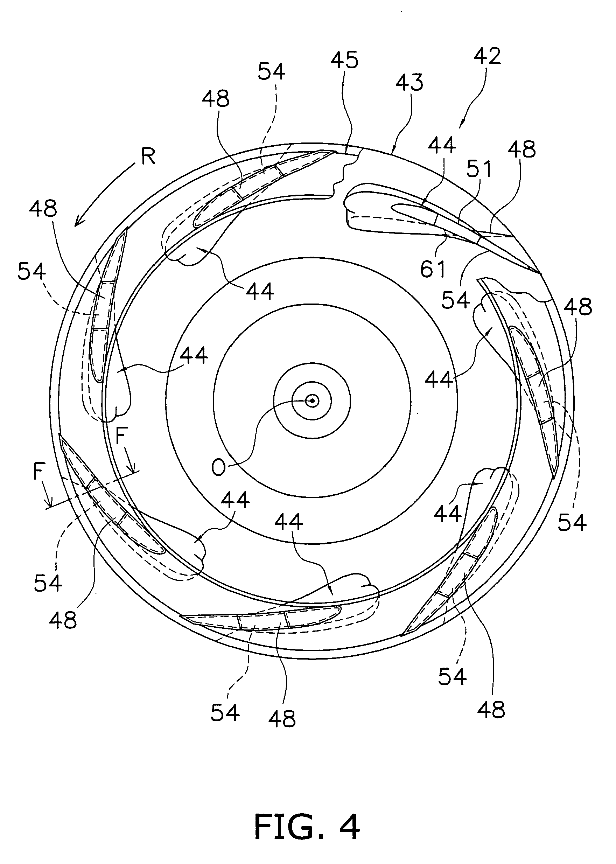

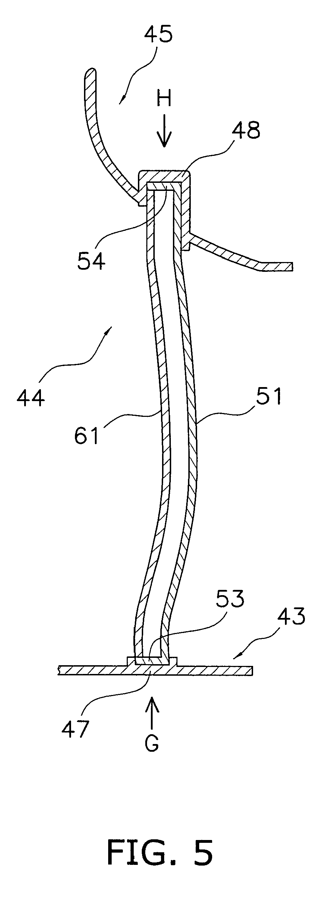

FIGS. 3 through 5 show an impeller 42 for a blower according to the present example. The impeller 42 for a blower is an impeller for a turbofan, and mainly has a discoid end plate 43 as a blade-supporting rotator, a plurality (seven in the present example) of blades 44 arranged annularly on the end plate 43, and an annular end ring 45 as a blade-supporting rotator disposed so as to sandwich the plurality of blades 44 with the end plate 43. The rotational center of the impeller 42 for a blower is indicated by O, and the rotational direction of the impeller 42 for a blower is indicated by R. FIG 3 is an external perspective view of the impeller 42 for a blower. FIG. 4 is a view of the impeller 42 for a blower as seen from the side of the end ring 45. FIG. 5 is a cross-sectional view along the line F-F.

First, the structure of the blades 44 will be described. The blades 44 are resinous members molded separately from the end plate 43 and the end ring 45, and are also hollow blades, each has a blade body 51 and a blade cover 61 forming a hollow space with the blade body 51, the blade cover being mounted by fitting into the blade body 51. A first blade weld part 53 welded by laser welding to the end plate 43 is formed at the end of each blade body 51 on the side near the end plate 43. A second blade weld part 54 welded by laser welding to the end ring 45 is formed at the end of each blade body 51 on the side near the end ring 45. A resin material having a low optical transmittance with respect to the laser light emitted during laser welding is used for the blades 44, similar to the absorptive resin member 12 in the above-described case of using a laser to weld the resin members 11, 12 together.

Next, the structure of the end plate 43 and the end ring 45 will be described. The end plate 43 is a substantially discoid resinous member formed so that a substantially conical convex part in the center protrudes toward the end ring 45. Plate weld parts 47 that can be fitted with the first blade weld parts 53 of the blades 44 are formed in the end plate 43, making it possible to position the blades 44, and the blades 44 are welded to the end plate 43 by laser welding. The end ring 45 is a bell-shaped resinous annular member which protrudes toward the side opposite to the end plate 43 from the external periphery part toward the opening in the central part. Ring weld parts 48 that can be fitted with the second blade weld parts 54 of the blades 44 are formed in the end ring 45, making it possible to position the blades 44, and the blades 44 are welded to the end ring 45 by laser welding. A resin material having a higher optical transmittance with respect to the laser light emitted during laser welding than the blades 44 is used for the end plate 43 and the end ring 45, similar to the transmissive resin member 11 in the above-described case of using a laser to weld the resin members 11, 12 together.

### (2) Method for manufacturing the impeller for a blower

Next, the method for manufacturing the impeller 42 will be described.

First, the blade bodies 51, the blade covers 61, the end plate 43, and the end ring 45 are molded from resins and prepared.

Next, the blades 44 are assembled by attaching the blade covers 61 to the blade bodies 51 by fitting them together.

Next, the second blade weld parts 54 of the blades 44 are fitted with the ring weld parts 48 of the end ring 45, and the first blade weld parts 53 of the blades 44 are fitted with the plate weld parts 47 of the end plate 43, whereby the plurality of blades 44 are disposed at predetermined positions between the end ring 45 and the end plate 43.

Next, using the laser welding apparatus 1 that was used when the above-described resin members 11, 12 were laser welded together, the blades 44 are welded and fixed to the end plate 43 and end ring 45 as blade-supporting rotators.

First, a case of welding a blade 44 to the end plate 43 will be described. In a case in which a blade 44 is welded to the end plate 43, as in the above-described case of using a laser to weld the resin members 11, 12 together, laser irradiation is performed in the G direction in FIG. 5 (specifically, from the side of the end plate 43 as the transmissive resin member 11) while the irradiation position is moved in the chord direction of the blade 44 (specifically, the A direction in FIG 2 when moving the laser irradiation lens unit 3, or the B direction in FIG. 2 when moving the blade 44 and end plate 43 as the resin members 11, 12 in the above-described case of using a laser to weld the resin members 11, 12 together) with respect to the superimposed portion (the portion corresponding to the superimposed part 13 in the above-described case of using a laser to weld the resin members 11, 12 together) formed by fitting the first blade weld part 53 of the blade 44 with the plate weld part 47 of the end plate 43, and instrument air as a noncombustible gas is blown onto the irradiation position in accordance with the movement of the laser light irradiation position, with the air being blown from the side of the end plate 43 as the transmissive resin member 11 in the above-described case of using a laser to weld the resin members 11, 12 together.

As in the above-described case of using a laser to weld the resin members 11, 12 together, in cases in which debris, metal powder, or the like adheres in some position along the irradiation pathway (in this case, in the surface of the end plate 43 as the transmissive resin member 11 on the side facing the laser irradiation lens unit 3, in the portion corresponding to the irradiation pathway E of the superimposed part 13 in the above-described case of using a laser to weld the resin members 11, 12 together) of the superimposed portion formed by fitting the first blade weld part 53 with the plate weld part 47 of the end plate 43, even if the debris, metal powder, or the like is ignited by the laser irradiation, burning of the resin in the ignited irradiation position is suppressed and the movement of the laser light irradiation position does not cause the resin to continuously burn along the irradiation pathway, because instrument air as a noncombustible gas is blown from the discharge nozzle 5 onto the ignited irradiation position. It is thereby possible to optimally prevent burn marks from remaining along the laser light irradiation pathway starting at the irradiation position where the debris, metal powder, or the like has ignited, and the blade 44 and end plate 43 are satisfactorily welded in the superimposed portion formed by fitting the first blade weld part 53 with the plate weld part 47 of the end plate 43.

In the case of welding the blades 44 to the end ring 45, as in the above-described case of welding the blades 44 to the end plate 43, laser irradiation is performed in the H direction in FIG. 5 (specifically, from the side of the end ring 45 as the transmissive resin member 11) while the irradiation position is moved in the chord direction of the blade 44 (specifically, the A direction in FIG. 2 when moving the laser irradiation lens unit 3, or the B direction in FIG. 2 when moving the blade 44 and end ring 45 as the resin members 11, 12 in the above-described case of using a laser to weld the resin members 11, 12 together) with respect to the superimposed portion formed by fitting the second blade weld part 54 of the blade 44 with the ring weld part 48 of the end ring 45, and instrument air as a noncombustible gas is blown onto the irradiation position in accordance with the movement of the laser light irradiation position, with the gas being blown from the side of the end ring 45 as the transmissive resin member 11 in the above-described case of using a laser to weld the resin members 11, 12 together.

When this is done, as in the above-described case of using a laser to weld the resin members 11, 12 together, in cases in which debris, metal powder, or the like adheres in some position along the irradiation pathway (in this case, in the surface of the end ring 45 as the transmissive resin member 11 on the side facing the laser irradiation lens unit 3, in the portion corresponding to the irradiation pathway E of the superimposed part 13 in the above-described case of using a laser to weld the resin members 11, 12 together) of the superimposed portion formed by fitting the second blade weld part 54 with the ring weld part 48 of the end ring 45, even if the debris, metal powder, or the like is ignited by the laser irradiation, burning of the resin in the ignited irradiation position is suppressed and the movement of the laser light irradiation position does not cause the resin to continuously burn along the irradiation pathway, because instrument air as a noncombustible gas is blown from the discharge nozzle 5 onto the ignited irradiation position. It is thereby possible to optimally prevent burn marks from remaining along the laser light irradiation pathway starting at the irradiation position where the debris, metal powder, or the like has ignited, and the blade 44 and end ring 45 are satisfactorily welded in the superimposed portion formed by fitting the second blade weld part 54 with the ring weld part 48 of the end ring 45.

Thus, in the method for manufacturing the impeller 42 for a blower in the present example as well, burn marks can be optimally prevented from remaining in the laser light irradiation pathway starting at the irradiation position where debris, metal powder, or the like has ignited, and satisfactory welding is achieved between the blades 44 and the end plate 43 as well as between the blades 44 and the end ring 45, by applying the laser welding method that uses the laser welding apparatus 1 according to the present invention to laser welding between the blades 44 as absorptive resin members and the blade-supporting rotators (the end plate 43 and the end ring 45 in this case) as transmissive resin members.

The laser welding method using the laser welding apparatus 1 according to the present invention can also be applied to the manufacture of impellers other than the impeller 42 for a turbofan in the present example.

### INDUSTRIAL APPLICABILITY

Using the present invention in a laser welding method for performing laser irradiation while moving the irradiation position makes it possible to optimally prevent burn marks from remaining in the laser light irradiation pathway even in cases in which debris, metal powder, or the like adhering to the superimposed part of the resin members is ignited by the laser irradiation.

## Claims

1. A laser welding method for resin members, wherein:
a transmissive resin member (11) and an absorptive resin member (12) having lower optical transmittance than the transmissive resin member are superimposed together to form a superimposed part (13); and
laser irradiation is performed from the side of the transmissive resin member while moving an irradiation position with respect to the superimposed part, and a noncombustible gas is blown onto the irradiation position from the side of the transmissive resin member in accordance with the movement of the laser light irradiation position.

2. The laser welding method as recited in claim 1, wherein the noncombustible gas is blown from a direction that intersects the movement direction of the irradiation position.

3. A method for manufacturing a resinous impeller for an air blower, wherein:
a plurality of resinous blades (44) as absorptive resin members are welded to resinous blade-supporting rotator (43, 45) as a transmissive resin member by the laser welding method as recited in claim 1 or 2.

4. A laser welding apparatus (1) for resin members, comprising:
a laser irradiation lens unit (3) configured to irradiate the resin members (11, 12, 43, 44, 45) with laser light while an irradiation position is moved; and
a discharge nozzle (5) mounted on the laser irradiation lens unit and configured to blow a noncombustible gas toward the irradiation position.

5. The laser welding apparatus (1) as recited in claim 4, wherein the discharge nozzle (5) is open so as to blow the noncombustible gas from a direction that intersects the movement direction of the irradiation position.

6. The laser welding apparatus (1) as recited in claim 4 or 5, wherein instrument air as the noncombustible gas is supplied to the discharge nozzle (5).
